# EUROPÄISCHE PATENTSCHRIFT

(11) **EP 2 021 905 B1**
(45) Veröffentlichungstag und Bekanntmachung des Hinweises auf die Patenterteilung: **26.10.2011**
(21) Anmeldenummer: 07724895.3
(22) Anmeldetag: 04.05.2007
(51) Int. Cl.: G06F 3/08, G06K 7/00, G06K 19/00

(54) **SIMULTANER SCHNITTSTELLENBETRIEB**
SIMULTANEOUS INTERFACE USE
MODE INTERFACE SIMULTANÉ

(30) Priorität: 05.05.2006 DE 102006021087
(43) Veröffentlichungstag der Anmeldung: 11.02.2009
(73) Patentinhaber: Giesecke & Devrient GmbH, 81677 München (DE)
(72) Erfinder: BALDISCHWEILER, Michael, 81825 München (DE); HARTEL, Karl Eglof, 80689 München (DE)
(86) Internationale Anmeldenummer: PCT/EP2007/003970
(87) Internationale Veröffentlichungsnummer: WO 2007/128529

(56) Entgegenhaltungen:
- EP-A- 1 100 045
- DE-A1- 19 531 372
- DE-A1- 19 800 798
- DE-A1-102004 043 408
- DE-C1- 3 935 364
- US-A- 6 105 874
- US-A1- 2005 223 143

## Beschreibung

Die vorliegende Erfindung betrifft ein Verfahren zum simultanen Betrieb zweier Schnittstellen eines portablen Datenträgers sowie einen derartigen Datenträger, nämlich eine Chipkarte, zum Beispiel eine Mobilfunkkarte.

Aktuelle Entwicklungen im Bereich portabler Datenträger verwenden zum flexibleren Einsatz mehrere physikalisch unabhängige Schnittstellen. Insbesondere können portable Datenträger mit einer herkömmlichen kontaktbehafteten Schnittstelle sowie einer zusätzlichen kontaktlosen Schnittstelle ausgestattet sein, z.B. einer Antenneneinrichtung für eine Funkverbindung. Die eigentliche Datenkommunikation wird dann mittels entsprechender kontaktbehafteter Kommunikationsprotokolle (im Chipkarten- und Mobilfunkbereich T=0, T=1) und/oder kontaktloser Kommunikationsprotokolle (T=CL) mit einer externen Kommunikationseinheit durchgeführt, mit der der Datenträger in Kommunikationsverbindung steht.

Sowohl die verfügbaren Betriebs- und Steuersysteme für portable Datenträger mit einer kontaktbehafteten und einer kontaktlosen Schnittstelle als auch die von den vielfältigen Lese-/Schreib- und Kommunikationseinheiten derzeit unterstützten Datenkommunikationsmodi lassen zu einem Zeitpunkt jedoch exklusiv nur eine Datenkommunikation entweder über die kontaktbehaftete oder über die kontaktlose Schnittstelle zu. Dies ist jedoch in solchen Situationen nachteilig, in denen während einer Datenkommunikation über eine der beiden Schnittstellen über die andere Schnittstelle eine weitere Datenkommunikation beginnt, die zu einem späteren Zeitpunkt nicht wiederholbar ist. Ein solches Szenario ist bei einem als Mobilfunkkarte ausgebildeten portablen Datenträger beispielsweise gegeben, wenn über die kontaktbehaftete Schnittstelle ein Mobilfunkgespräch geführt wird und währenddessen über die kontaktlose Schnittstelle eine Bezahltransaktion, z.B. im öffentlichen Personennahverkehr, abgewickelt werden soll. Für andere Typen von portablen Datenträgern sind entsprechende Szenarien denkbar.

Eine naheliegende Lösung dieses Problems ist die Einrichtung eines echtzeitfähigen Multitasking-Betriebssystems auf dem portablen Datenträger, um eine gleichzeitige Datenkommunikation über beide Schnittstellen als nebenläufige, quasi-parallele Prozesse zu realisieren. Diese Lösung ist jedoch im Hinblick auf die begrenzten Ressourcen von portablen Datenträgern derzeitig nicht realistisch und vielfach für den normalen Gebrauch solcher Datenträger auch nicht erforderlich.

Die US 6,105,874 offenbart einen portablen Datenträger mit einer kontaktbehafteten und einer kontaktlosen Schnittstelle, der zwischen den beiden Schnittstellen mittels einer ODER-Logik umschaltet. Bei einer gleichzeitigen Aktivität beider Schnittstellen führt die ODER-Verknüpfung jedoch zu Datenverlusten. Die US 6,045,043 offenbart eine Doppelschnittstellenvorrichtung, bei der eine kontaktlose Datenkommunikation begonnen wird, sobald an der kontaktlosen Schnittstelle ein Magnetfeld anliegt, unabhängig vom jeweiligen Zustand der kontaktbehafteten Schnittstelle. Diese Bevorzugung der kontaktlosen Schnittstelle führt jedoch zu Nachteilen im Hinblick auf die Stabilität von kontaktbehafteten Datenkommunikationen. In DE 19800798 A1 wird eine Umschaltung zwischen den beiden Schnittstellen beschrieben. DE 102004043408 A1 zeigt die Merkmale aus dem Oberbegriff von Anspruch 1.

Demzufolge ist es eine Aufgabe der vorliegenden Erfindung, eine kontaktbehaftete und eine kontaktlose Schnittstelle eines portablen Datenträgers simultan und zuverlässig betreiben zu können.

Diese Aufgabe wird erfindungsgemäß durch ein Verfahren und eine Vorrichtung mit den Merkmalen der unabhängigen Ansprüche gelöst. Die abhängigen Ansprüche beschreiben vorteilhafte Ausgestaltungen und Weiterbildungen der Erfindung.

Nachfolgend wird von der Situation ausgegangen, dass bei einem portablen Datenträger, der mit einer eine erste Schnittstelle umfassenden ersten Schnittstelleneinrichtung und einer eine zweite Schnittstelle umfassenden zweiten Schnittstelleneinrichtung sowie einem Prozessor ausgestattet ist und die erste Schnittstelleneinrichtung eine Datenkommunikation über die erste Schnittstelle durchführt, währenddessen eine Datenkommunikation über die zweite Schnittstelle von der zweiten Schnittstelleneinrichtung begonnen wird. Eine Sequenzialisierungseinrichtung des Datenträgers sequenzialisiert dann die konkurrierenden Datenkommunikationen durch Unterbrechen der ersten Datenkommunikation und Beginnen der zweiten Datenkommunikation oder durch Verzögern des Beginns der zweiten Datenkommunikation. Auf diese Weise kann die während der ersten Datenkommunikation beginnende zweite Datenkommunikation quasi simultan zu der ersten abgearbeitet werden, ohne dass ein Datenkonflikt entsteht oder eine der beiden Datenkommunikationen aufgrund einer bevorzugten Behandlung der jeweils anderen Datenkommunikation gänzlich unberücksichtigt bleibt.

Die Sequenzialisierungseinrichtung koordiniert den Betrieb der Schnittstelleneinrichtungen und der jeweils zugehörigen Schnittstellen derart, dass eine sequenzielle Bearbeitung der simultanen Datenkommunikationen ermöglicht wird. Dazu sendet die Sequenzialisierungseinrichtung ein entsprechendes Signal an die erste Schnittstelleneinrichtung, um dieser zu signalisieren, dass die gerade durchgeführte erste Datenkommunikation unterbrochen werden soll, und ein weiteres Signal an die zweite Schnittstelleneinrichtung, um zu signalisieren, dass die zweite Datenkommunikation begonnen werden soll. Alternativ sendet die Sequenzialisierungseinrichtung der zweiten Schnittstelleneinrichtung ein Signal, um zu signalisieren, dass die zweite Datenkommunikation verzögert werden soll, während die erste Schnittstelleneinrichtung die erste Datenkommunikation unbeeinflusst fortführen kann.

Für den Fall, dass die erste Schnittstelleneinrichtung eine kontaktlose Schnittstelleneinrichtung mit einer kontaktlosen Schnittstelle und die zweite Schnittstelleneinrichtung eine kontaktbehaftete Schnittstelleneinrichtung mit einer kontaktbehafteten Schnittstelle ist, ergibt sich die Situation, dass während einer laufenden kontaktlosen Datenkommunikation über die kontaktlose Schnittstelle eine kontaktbehaftete Datenkommunikation über die kontaktbehaftete Schnittstelle hinzutritt. In diesem Fall wird bei einer ersten Ausführungsform der Erfindung nach einer Unterbrechung der laufenden kontaktlosen Datenkommunikation die kontaktbehaftete Datenkommunikation begonnen und vollständig zu Ende geführt und die unterbrochene kontaktlose Datenkommunikation anschließend fortgesetzt. Dies wird von der Sequenzialisierungseinrichtung durch entsprechende Signale an die kontaktlose und die kontaktbehaftete Schnittstelleneinrichtung koordiniert. Hierbei wird im Rahmen der kontaktbehafteten Datenkommunikation ein eingehender Nachrichten- oder Datenblock vollständig von der kontaktbehafteten Schnittstelleneinrichtung empfangen und in einem FIFO- ("Fist-In-First-Out") oder sonstigen Speicher des Datenträgers abgespeichert. Diese Speicheroperation kann beispielsweise durch einen Direktspeicherzugriff (DMA; "Direct Memory Access") oder Interrupt-gesteuert realisiert werden. Ein derartiger vollständig zu speichernder Nachrichten- oder Datenblock kann insbesondere eine Anweisung sein, die von einer mit dem Datenträger über die kontaktbehaftete Schnittstelle in Kontakt stehenden externen Kommunikationseinheit gesendet wird, z.B. eine Kommando-APDU (C-APDU; "Application Protocol Data Unit") bei Verwendung des T=1 Kommunikationsprotokolls.

Im Rahmen der kontaktbehafteten Datenkommunikation wird zu der eingehenden Anweisung, z.B. einer Kommando-APDU, über die kontaktbehaftete Schnittstelle eine Antwort, z.B. eine entsprechende Antwort-APDU (Response-APDU; R-APDU) auf Veranlassung der Sequenzialisierungseinrichtung an die externe Kommunikationseinheit versandt. Hierfür steht im Rahmen des T=1 Protokolls eine bestimmte Antwortzeit (BWT; "Block Waiting Time") zwischen der eingehenden Anweisung und dem Versenden der entsprechenden Antwort zur Verfügung, wobei die Datenkommunikation von der externen Kommunikationseinheit abgebrochen wird, wenn bei ihr innerhalb der Antwortzeit BWT keine Antwort eingeht. Um diese Folge bei Verstreichen der Antwortzeit BWT zu vermeiden, kann die Sequenzialisierungseinrichtung die kontaktbehaftete Schnittstelleneinrichtung durch ein entsprechendes Signal anweisen, eine Verlängerungsanfrage (WTX; "Waiting Time Extension") an die wartende externe Kommunikationseinheit zu richten, um die zum Erzeugen und Versenden der Antwort von der kontaktbehafteten Schnittstelleneinrichtung benötigte Bearbeitungszeit zu verlängern.

Bei einem zweiten, nicht erfindungsgemäßen Ansatz wird der Beginn der kontaktbehafteten Datenkommunikation so lange verzögert, bis die bereits ablaufende kontaktlose Datenkommunikation vollständig beendet ist. Das Verzögern des Beginns der kontaktbehafteten Datenkommunikation wird von der Sequenzialisierungseinrichtung durch ein entsprechendes Signal an die kontaktbehaftete Schnittstelleneinrichtung veranlasst. Daraufhin verzögert die kontaktbehaftete Schnittstelleneinrichtung die kontaktbehaftete Datenkommunikation durch Ignorieren eines Dateneingangs an der kontaktbehafteten Schnittstelle, indem eingehende Daten nicht weiterverarbeitet werden. Durch das Ignorieren/Nichtverarbeiten der an der kontaktbehafteten Schnittstelle eingehenden Daten kann jedoch ein der kontaktbehafteten Schnittstelle unmittelbar nachgeordneter asynchroner Eingangspuffer (UART; "Universal Asynchronous Receiver Transmitter") überlaufen, da die eingehenden Daten die (in der Regel geringe) Speicherkapazität des UART-Pufferspeichers übersteigen.

Dies wird jedoch nach Beendigung der kontaktlosen Datenkommunikation von der Sequenzialisierungseinrichtung anhand des Zustands des UART-Speichers erkannt, so dass eine während des Durchführens der kontaktlosen Datenkommunikation begonnene kontaktbehaftete Datenkommunikation nachträglich erkannt werden kann. Aufgrund der auf diese Weise festgestellten fehlerhaften kontaktbehafteten Datenkommunikation wird die kontaktbehaftete Schnittstelleneinrichtung durch ein entsprechendes Signal von der Sequenzialisierungseinrichtung angewiesen, eine Fehlermeldung an die externe Kommunikationseinheit zu senden, so dass diese die kontaktbehaftete Datenkommunikation wiederholt. Die kontaktbehaftete Datenkommunikation kann dann vollständig und ungestört von der kontaktbehafteten Schnittstelleneinrichtung empfangen werden.

Die vorgenannten beiden Ausätze sind insbesondere für Chipkarten und dergleichen geeignet, deren kontaktbehaftete Schnittstelleneinrichtung gemäß des blockbasierten T=1-Kommunikationsprotokolls arbeitet. Demgegenüber kann die folgende zweite Ausführungsform vorzugsweise im Rahmen des T=0-Kommunikationsprotokolls durch die kontaktbehaftete Schnittstelleneinrichtung einer Chipkarte eingesetzt werden. Bei der zweiten Ausführungsform wird die kontaktlose Datenkommunikation bei Beginn der kontaktbehafteten Datenkommunikation unterbrochen und es werden nur die Kopfdaten ("Header") einer im Rahmen der kontaktbehafteten Datenkommunikation empfangenen Anweisung (C-APDU) empfangen, die bei einer kontaktbehafteten Datenkommunikation im Rahmen des T=0-Protokolls nicht verloren gehen dürfen. Bei einer eingehenden Anweisung in Form einer Kommando-APDU bestehen die Kopfdaten im T=0-Protokoll aus fünf Byte, die auf Veranlassung de Sequenzialisierungseinrichtung in einem FIFO-Puffer ("fist-in-first-out") oder einem sonstigem Speicher oder Speicherbereich des Datenträgers insbesondere durch einen Direktspeicherzugriff (DMA) oder Interrupt-gesteuert zwischengespeichert werden.

Nach Empfang der Kopfdaten schaltet die Sequenzialisierungseinrichtung wieder auf die zeitweilig deaktivierte kontaktlose Schnittstelleneinrichtung um, um die unterbrochene kontaktlose Datenkommunikation fortzusetzen. Nach Beendigung der fortgesetzten kontaktlosen Datenkommunikation wird die kontaktbehaftete Datenkommunikation wieder durch die kontaktbehaftete Schnittstelleneinrichtung fortgesetzt und schließlich beendet. Bei der Unterbrechung der kontaktbehafteten Datenkommunikation nach Empfang der Kopfdaten muss eine vorgegebene Unterbrechungszeit (WWT, "Work Waiting Time"), die die Maximaldauer einer Unterbrechung der kontaktbehafteten Datenkommunikation angibt, beachtet werden. Falls die kontaktlose Datenkommunikation nicht innerhalb dieser Unterbrechungszeit WWT fortgesetzt werden kann, wird die Unterbrechungszeit WWT solange verlängert, bis die kontaktlose Datenkommunikation beendet werden und die unterbrochene kontaktbehaftete Datenkommunikation wieder fortgesetzt werden kann. Das Unterbrechen, Umschalten und Fortsetzen der Datenkommunikationen wird von der Sequenzialisierungseinrichtung koordiniert, die auch die vorgegebene Unterbrechungszeit WWT der kontaktbehafteten Datenkommunikation überwacht und gegebenenfalls verlängert.

Während die drei oben beschriebenen Ansätze anwendbar sind, wenn während einer laufenden kontaktlosen Datenkommunikation eine kontaktbehaftete Datenkommunikation beginnt, werden nachfolgend zwei weitere nicht erfindungsgemäße Asätze für den umgekehrten Fall beschrieben, dass eine kontaktlose Datenkommunikation während einer laufenden kontaktbehafteten Datenkommunikation beginnt. Prinzipiell sind die beiden folgenden Ansätze beliebig mit den drei oben beschriebenen Ausführungsformen kombinierbar.

Bei dem vierten Ansatz wird die laufende kontaktbehaftete Datenkommunikation auf Veranlassung der Sequenzialisierungseinrichtung durch eine Wartephase unterbrochen, während der die Sequenzialisierungseinrichtung die kontaktlose Schnittstelleneinrichtung aktiviert. Während dieser Wartephase, die vorzugsweise direkt nach dem Empfang einer Anweisung (z.B. einer C-APDU) durch die kontaktbehaftete Schnittstelleneinrichtung und vor dem Versenden einer entsprechenden Antwort (z.B. einer R-APDU) eingerichtet wird, ist die kontaktlose Schnittstelleneinrichtung empfangsbereit. Falls während der Wartephase keine kontaktlose Datenkommunikation beginnt, wird wieder die kontaktbehaftete Schnittstelleneinrichtung aktiviert, die dann die zuvor unterbrochene kontaktbehaftete Datenkommunikation fortsetzen kann. Falls während der Wartephase jedoch eine kontaktlose Datenkommunikation beginnt, wird diese von der kontaktlosen Schnittstelleneinrichtung zu Ende geführt, selbst wenn dies über die ursprünglich eingerichtete Wartephase hinausgeht. In diesem Fall wird die Wartephase auf Veranlassung der Sequenzialisierungseinrichtung so lange verlängert, bis die kontaktlose Datenkommunikation vollständig beendet ist.

Die Wartephase wird von der kontaktbehafteten Schnittstelleneinrichtung als proaktive Phase realisiert, d.h. mittels proaktiver Kommandos, die die beim T=0 und T=1 Protokoll obligatorische Master-Slave-Beziehung zwischen der externen Kommunikationseinheit und dem Datenträger umkehren, so dass eine Anweisung von dem Datenträger ausgehen kann, die von der externen Kommunikationseinheit beantwortet wird. Durch derartige proaktive Kommandos des Datenträgers können bei der externen Kommunikationseinheit prinzipiell Wartephasen beliebiger Länge während einer kontaktbehafteten Datenkommunikation für anderweitige Zwecke beantragt werden. Dies ist insbesondere mittels dem "FETCH"-Kommando und dem "TERMINAL-RESPONSE"-Kommando möglich, mit deren Hilfe eine externe Kommunikationseinheit veranlasst werden kann, zunächst eine Anweisung (z.B. das Beantragen der Wartephase) bei dem Datenträger abzuholen und anschließend eine Antwort auf die Anweisung an den Datenträger zu schicken. Mit Hilfe derartiger proaktiver Kommandos kann im Falle einer beginnenden kontaktlosen Datenkommunikation die Wartephase auf Veranlassung der Sequenzialisierungseinrichtung so lange verlängert werden, bis die kontaktlose Datenkommunikation vollständig abgeschlossen ist. Da der Mechanismus der proaktiven Kommandos sowohl im Rahmen des T=0- als auch des T=1-Protokolls vorgesehen ist, kann diese vierte Ausführungsform mit beiden Protokollen realisiert werden.

Bei einem fünften Ansatz wird die kontaktlose Schnittstelle von der Sequenzialisierungseinrichtung so lange gesperrt/deaktiviert, bis die bereits laufende kontaktbehaftete Datenkommunikation über die kontaktbehaftete Schnittstelleneinrichtung beendet ist, d.h. eine Anweisung (C-APDU) empfangen und eine entsprechende Antwort (R-APDU) versendet wurde. Hierbei wird ausgenutzt, dass eine externe Funkkommunikationseinheit, die eine kontaktlose Datenkommunikation mit dem Datenträger über dessen kontaktlose Schnittstelleneinrichtung aufnehmen will, durch wiederholtes Pollen erkennt, wenn die kontaktlosen Schnittstelle entsperrt/aktiviert ist, um dann mit der kontaktlosen Datenkommunikation zu beginnen. Diese Ausführungsform wird vorzugsweise bei dem T=0-Protokoll eingesetzt, kann aber auch im T=1-Protokoll implementiert werden.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine schematische Darstellung einer Chipkarte mit einer kontaktbehafteten und einer kontaktlosen Schnittstelle;
- Figur 2: ein Ablaufdiagramm einer Sequenzialisierung im T=0-Protokoll;
- Figur 3: ein Ablaufdiagramm einer ersten Variante einer Sequenzialisierung im T=1-Protokoll;
- Figur4: ein Ablaufdiagramm einer nicht erfindungsgemäßen Variante einer Sequenzialisierung im T=1-Protokoll; und
- Figur 5: ein Ablaufdiagramm einer alternativen, nicht erfindungsgemäßen Sequenzialisierung.

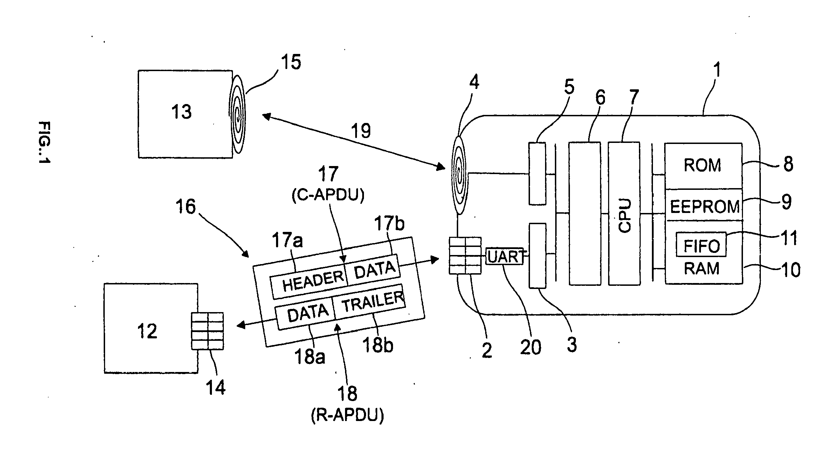

Figur 1 zeigt schematisch einen als Chipkarte 1 ausgebildeten portablen Datenträger mit einem Prozessor 7 (CPU) und einer dreistufigen Speicheranordnung, bestehend aus einem permanenten ROM-Speicher 8, in dem das Betriebssystem der Chipkarte 1 liegt, einem wiederbeschreibbaren EEPROM-Speicher 9 und einem flüchtigen RAM-Arbeitsspeicher 10. Die Chipkarte 1 umfasst desweiteren eine kontaktbehaftete Schnittstelleneinrichtung 2, 3, die ein herkömmliches sechs- oder achtfeldriges Kontaktfeld nach ISO 7816 als physikalische Schnittstelle 2 und eine entsprechende Schruttstellensteuerung 3 umfasst. Darüber hinaus umfasst die Chipkarte 1 eine kontaktlose Schnittstelleneinrichtung 4, 5 mit einer kontaktlosen Schnittstelle 4, die als Antenne oder dergleichen eingerichtet sein kann, und einer entsprechenden Schnittstellensteuerung 5.

Die kontaktlose Daten- und Energieübertragung zu/von der Chipkarte 1 kann auf vielfältige Weise realisiert werden, insbesondere als herkömmliche Funk- oder RFID-Verbindung. Die jeweiligen Schnittstellensteuerungen 3, 5 steuern den Betrieb der zugehörigen Schnittstellen 2, 4 nach vorgegebenen standardisierten Kommunikationsprotokollen. So kann die kontaktbehaftete Schnittstelle 2 beispielsweise gemäß der im Chipkarten- und Mobilfunkbereich üblichen Kommunikationsprotokolle T=0 oder T=1 betrieben werden, während die kontaktlose Schnittstelle 4 gemäß dem T=CL-Protokoll betrieben wird. Die beiden Schnittstellensteuerungen 3, 5 arbeiten prinzipiell unabhängig voneinander und bearbeiten lediglich diejenige Datenkommunikation 16,19, die über die entsprechende Schnittstelle 2, 4 abgewickelt wird.

Bei simultanen Datenkommunikationen 16,19 an beiden Schnittstellen 2, 4 wird eine koordinierende Sequenzialisierung von einer Sequenzialisierungseinrichtung 6 vorgenommen, die den beiden Schnittstelleneinrichtungen 2, 3 und 4, 5 nachgeschaltet ist. Die Sequenzialisierungseinrichtung 6 sequenzialisiert die Abwicklungen der beiden konkurrierenden Datenkommunikationen 16,19, die von den entsprechenden Schnittstelleneinrichtungen 2, 3 und 4, 5 prinzipiell parallel durchgeführt werden müssten, derart, dass zu jedem Zeitpunkt von dem Prozessor 7 immer nur eine der beiden Datenkommunikationen 16,19 bearbeitet wird und trotzdem kein Datenverlust auftritt. Zur Sequenzialisierung bedarf es einer von der Sequenzialisierungseinrichtung 6 koordinierten Kommunikation mit den jeweiligen externen (Funk-) Kommunikationseinheiten 12,13, die mit der Chipkarte 1 die simultane Datenkommunikationen 16,19 betreiben. Sowohl die Schnittstellensteuerungen 3, 5 der Schnittstellen 2, 4 als auch die Sequenzialisierungseinrichtung 6 können als Hardwareelemente der Chipkarte 1 ausgestaltet sein oder als Softwarekomponenten, die entweder als Applikationen im EEPROM-Speicher 9 oder als Betriebssystembestandteile im ROM-Speicher 8 abgelegt sind. Bei ihrer Ausführung durch den Prozessor 7 der Chipkarte 1 werden dann entsprechende Prozesse gebildet und abgearbeitet.

Bei der Chipkarte 1 kann es sich prinzipiell um jede beliebige mit einem Prozessor ausgestattete Chipkarte handeln, zum Beispiel um eine Smart-Card, eine sichere Multimediakarte oder eine Mobilfunkkarte, wie z.B. eine GSM-Mobilfunkkarte. Im letztgenannten Fall kommuniziert die GSM-Mobilfunkkarte über die kontaktbehaftete Schnittstelle 2 mit einem Telekommunikationsendgerät/Mobiltelefon, in welches die GSM-Mobilfunkkarte eingesetzt ist, während über die kontaktlose Schnittstelle 4 eine kontaktlose Datenkommunikation mit einer externen Funkkommunikationseinheit durchgeführt werden kann, zum Beispiel einem entsprechend ausgerüsteten Verkaufsterminal oder dergleichen. So werden im Falle einer kontaktbehafteten Kommunikation 16 Kommunikationsdaten 17,18 zwischen der kontaktbehafteten Schnittstelle 2 der Chipkarte 1 und einer entsprechenden kontaktbehafteten Schnittstelle 14 einer externen Kommunikationseinheit 12 ausgetauscht. Ebenso werden bei einer kontaktlosen Datenkommunikation 19 Kommunikationsdaten zwischen der kontaktlosen Schnittstelle 4 und einer entsprechenden kontaktlosen Schnittstelle 15 einer Funkkommunikationseinheit 13 ausgetauscht.

Eine kontaktbehaftete Datenkommunikation 16 der Chipkarte 1 wird bei Verwendung des T=0 oder T=1-Protokolls im Master-Slave-Betrieb mit der externen Kommunikationseinheit 12, z.B. einem Mobilfunkgerät, als aktivem Kommunikationspartner (Master) und der Chipkarte 1 als reaktivem Kommunikationspartner (Slave) durchgeführt, der lediglich auf die Anweisungen der externen Kommünikationseinheit 12 reagiert. Deshalb kann im weiteren davon ausgegangen werden, dass eine kontaktbehaftete Datenkommunikation 16 eine Anweisung 17 der externen Kommunikationseinheit 12 an die Chipkarte 1 und eine anschließende Antwort 18 der Chipkarte 1 an die Kommunikationseinheit 12 umfasst. Anweisungen und Antworten sind hierbei vorzugsweise protokollunabhängig nach ISO 7816 aufgebaut. Die Anweisung 17 ist vorzugsweise als Kommando-APDU (Command-APDU; C-APDU) und die Antwort 18 als Antwort-APDU (Response-APDU; R-APDU) aufgebaut. Sowohl eine C-APDU 17 als auch eine R-APDU 18 entsprechen einem standardisierten Datenformat und umfassen sowohl die eigentlichen Nutzdaten als auch ergänzende Steuerdaten. So besteht eine C-APDU 17 aus führenden Kopfdaten 17a ("Header") und folgenden Nutzdaten 17b, während eine R-APDU 18 aus führenden Nutzdaten 18a und folgenden Schlussdaten 18b ("Trailer") besteht.

Im Rahmen der vorliegenden Erfindung werden lediglich diejenigen technischen Merkmale von Chipkarten, Chipkartenprotokollen und Datenformaten erläutert, die zum Verständnis der Erfindung unmittelbar notwendig sind. Soweit im Folgenden von einer Unterbrechung oder einer Wiederaufnahme einer Datenkommunikation gesprochen wird, ist die Unterbrechung oder Wiederaufnahme der Bearbeitung der Kommunikation durch die SIM-Karte 1 insbesondere durch deren CPU 7 gemeint. Detaillierte und ergänzende technische Zusammenhänge werden im "Handbuch der Chipkarten, 4. Aufl." von W. Rankl und W. Effing beschrieben.

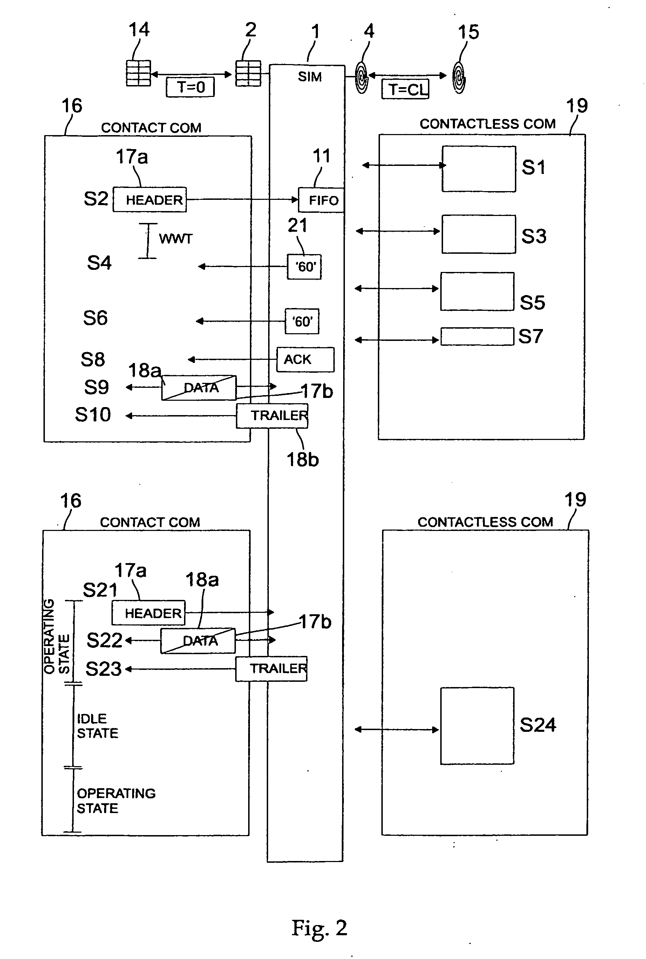

Figur 2 zeigt schematisch die durch die Sequenzialisierungseinrichtung 6 einer SIM-Mobilfunkkarte 1 als bevorzugte Implementierung eines erfindungsgemäßen portablen Datenträgers sequenzialisierte simultane Abarbeitung einer kontaktbehafteten Datenkommunikation 16 (CONTACT COM; Fig. 2, links) über die kontaktbehaftete Schnittstelleneinrichtung 2, 3 und einer kontaktlosen Datenkommunikation 19 (CONTACTLESS COM; Fig. 2, rechts) über die kontaktlose Schnittstelleneinrichtung 4, 5. Hierbei bilden die Schritte S1 bis S10 (Fig. 2, oben) die Sequenzialisierung einer kontaktbehafteten Datenkommunikation 16, die während einer bereits laufenden kontaktlosen Datenkommunikation 19 einsetzt, während mit den Schritten S21 bis S24 (Fig. 2, unten) eine einfache Sequenzialisierung einer kontaktlosen Datenkommunikation 19 realisiert wird, die einsetzt, während eine kontaktbehaftete Datenkommunikation 16 bereits läuft.

Bei einer kontaktbehafteten Datenkommunikation 16 im Rahmen des T=0-Protokolls sollten die 5 Byte umfassenden Kopfdaten 17a (HEADER) einer empfangenen C-APDU 17 nicht verloren gehen. Deshalb wird zumindest die Bearbeitung einer laufenden kontaktlosen Datenkommunikation (Schritt S1) bei Beginn einer kontaktbehafteten Datenkommunikation 16 unterbrochen. Die von einer externen Kommunikationseinheit 12 gesendeten Kopfdaten 17a werden vollständig empfangen (Schritt S2) und von der Sequenzialisierungseinrichtung 6 z.B. in einem FIFO-Speicher 11 zwischengespeichert, der vorzugsweise im RAM-Speicher 10 der SIM-Karte 1 eingerichtet sein kann. Ebenso können die Kopfdaten 17a auch per Direktspeicherzugriff (DMA; "Direct Memory Access") oder über einen Interrupt in einen hierfür vorgesehenen Speicher oder Speicherbereich der SIM-Karte 1 geschrieben werden, z.B. in den RAM-Arbeitsspeicher 10.

Nach dem vollständigen Empfang der Kopfdaten 17a schaltet die Sequenzialisierungseinrichtung 6 wieder auf die kontaktlose Datenkommunikation 19 um, die dann zumindest weiter geführt (Schritt S3) oder vollständig zu Ende geführt wird.

Eine Unterbrechungszeit WWT ("Work Waiting Time") an der kontaktbehafteten Schnittstelle 2, die die maximale Zeitdauer zwischen den Startflanken zweier aufeinander folgender empfangener Bytes vor Abbruch des Datenempfangs angibt, wird entweder von der Sequenzialisierungseinrichtung 6 oder der Schnittstellensteuerung 3 überwacht. Die SIM-Karte 1 sendet (kurz) vor Ablauf der WWT eine Verlängerungsanfrage 21, beispielsweise in der Form eines so genannten Null-Bytes: '60' als ProcedureByte, über die kontaktbehaftete Schnittstelle 2 an die externe Kommunikationseinheit 14 (Schritt S4). Zu diesem Zweck wird die in Schritt S3 fortgesetzte kontaktlose Datenkommunikation 19 gegebenenfalls wieder unterbrochen und erst anschließend fortgesetzt (Schritt S5).

Es können entsprechend mehrfach Schritte des Sendens von Verlängerungsanfragen (S6) über die kontaktbehaftete Schnittstelle 2 folgen, um die kontaktbehaftete Datenkommunikation 16 aufrecht zu erhalten bis die kontaktlose Datenkommunikation 19 abgeschlossen ist (Schritt S7). Auf diese Weise wird das Quittieren des vollständigen Empfangs der Kopfdaten 17a einer eintreffenden C-APDU durch die Schnittstelleneinheit 3 mittels eines Acknowledge ACK als Procedure Byte (Schritt S8) bis nach Beendigung der kontaktlosen Datenkommunikation 19 verzögert.

Anschließend läuft die nach Eingang der Kopfdaten 17a (Schritt S2) unterbrochene kontaktbehaftete Datenkommunikation 16 protokollgemäß weiter, indem in Schritt S9 der Austausch von Nutzdaten (DATA) stattfindet, also einerseits die Nutzdaten 17b der Kommado-APDU 17 an die SIM-Karte 1 und andererseits die Nutzdaten 18a der Antwort-APDU 18 an die externe Kommunikationseinheit 12 übertragen werden. Abschließend werden auch die Schlussdaten 18b (TRAILER) der Antwort-APDU 18 an die externe Kommunikationseinheit 14 übertragen (Schritt S10). Diese Schlussdaten 18b umfassen beispielsweise die Rückgabekodizes SW1 und SW2 ("return code") der Antwort-APDU 18.

Ist die kontaktlose Datenkommunikation 19 dagegen bereits mit dem Schritt S3 abgeschlossen, so wird der unterbrochene Empfang der Anweisung 17 über die die kontaktbehaftete Schnittstelle 2 mit den Schritten des Sendens S8 der Bestätigung ACK, dem Datenaustausch S9 und dem Übertragen S10 der Schlussdaten 18b fortgesetzt.

Auch der umgekehrte Fall, dass während einer kontaktbehafteten Datenkommunikation 16 eine kontaktlose Datenkommunikation 19 beginnt, kann im Rahmen des T=0-Protokolls seqüenzialisiert werden.

In einer ersten, nicht separat in einer Figur dargestellten Variante wird die Bearbeitung der kontaktbehafteten Datenkommunikation 16 zunächst unterbrochen und anschließend mit Hilfe von Verlängerungsanfragen 21 aufrecht erhalten, um die kontaktlose Datenkommunikation 19 quasi parallel abarbeiten zu können. Das Verfahren läuft an sich analog zu den oben beschriebenen Schritten S2 bis S10 in Figur 1 ab, nur der Schritt S1 ist gedanklich zu streichen. Nach dem Empfang der Kopfdaten 17a als erstem Verfahrensschritt wird die laufende kontaktbehaftete Datenkommunikation 16 unterbrochen durch eine neu begonnene kontaktlose Datenkommunikation 19. Eine WWT wird für die kontaktbehaftete Datenkommunikation 16 überwacht und gegebenenfalls einmal oder mehrfach durch eine Verlängerungsanfrage 21 verlängert, bis die kontaktlose Datenkommunikation 19 abgeschlossen ist. Danach kann mit der unterbrochenen kontaktbehafteten Datenkommunikation 16 fortgefahren werden.

In einer nicht erfindungsgemäßen Variante, die in der unteren Hälfte von Fig. 2 dargestellt ist, wird zunächst die kontaktbehaftete Datenkommunikation 16 in einem Betriebszustand (OPERATING STATE), in dem gleichzeitig die kontaktlose Schnittstelle 4 durch die Sequenzialisierungseinrichtung 6 gesperrt ist, über das Senden von Kopfdaten 17a einer Kommando-APDU 17 (Schritt S21), den Austausch von Nutzdaten 17b, 18a (Schritt S22) und das Versenden von Schlussdaten 18b einer Antwort-APDU (Schritt S23) durchgeführt. Die kontaktlose Datenkommunikation 19 wird während des Betriebszustands der kontaktbehafteten Schnittstelleneinrichtung 2, 3 blockiert bzw. verzögert. Das heißt, dass während des Betriebszustands der kontaktbehafteten Schnittstelleneinrichtung 2, 3 Interrupts, die an der kontaktlosen Schnittstelleneinrichtung 4, 5 aufgrund einer einsetzenden kontaktlosen Datenkommunikation 19 erzeugt werden, z.B. weil die kontaktlose Schnittstelle 4 in das Magnetfeld einer Funkkommunikationseinheit 13 eintritt, ignoriert und nicht bearbeitet werden.

Da die Funkkommunikationseinheit 13 bei einer gesperrten kontaktlosen Schnittstelleneinheit 4, 5 für eine bestimmte Zeit ein Polling durchführt, also wiederholte Kontaktaufnahmeversuche unternimmt, kann der Beginn der kontaktlosen Datenkommunikation 19 bis zur Beendigung des Betriebszustands verschoben werden. Nach Senden der Schlussdaten 18b an die externe Kommunikationseinheit 12 überführt die Sequenzialisierungseinrichtung 6 die kontaktbehaftete Schnittstelleneinrichtung 2, 3 von dem Betriebszustand in einen Ruhezustand (IDLE STATE), in dem gleichzeitig die kontaktlose Schnittstelleneinheit 4, 5 wieder freigeschaltet wird, so dass bei Anliegen eines entsprechenden Magnetfelds an der kontaktlosen Schnittstelle 4 (bzw. mit dem Empfang eines RIQx-Signals von der externen Funkkommunikationseinheit 13) die kontaktlose Datenkommunikation 19 in Schritt S24 begonnen und durchgeführt werden kann. Nach Beendigung der kontaktlosen Datenkommunikation 19 wird durch die Sequenzialisierungseinrichtung 6 der Betriebszustand der kontaktbehafteten Schnittstelleneinrichtung 2, 3 wieder eingeschaltet und es kann eine weitere kontaktbehaftete Datenkommunikation 16 stattfinden.

Mit den in Bezug auf Fig. 2 beschriebenen sich ergänzenden Sequenzialisierungsverfahren wird eine alternierende und verlustfreie Bearbeitung der konkurrierenden Datenkommunikationen 16, 19 über die Schnittstellen 2, 4 der SIM-Karte 1 und damit ein einfaches Multitasking für das T=0 Protokoll realisiert.

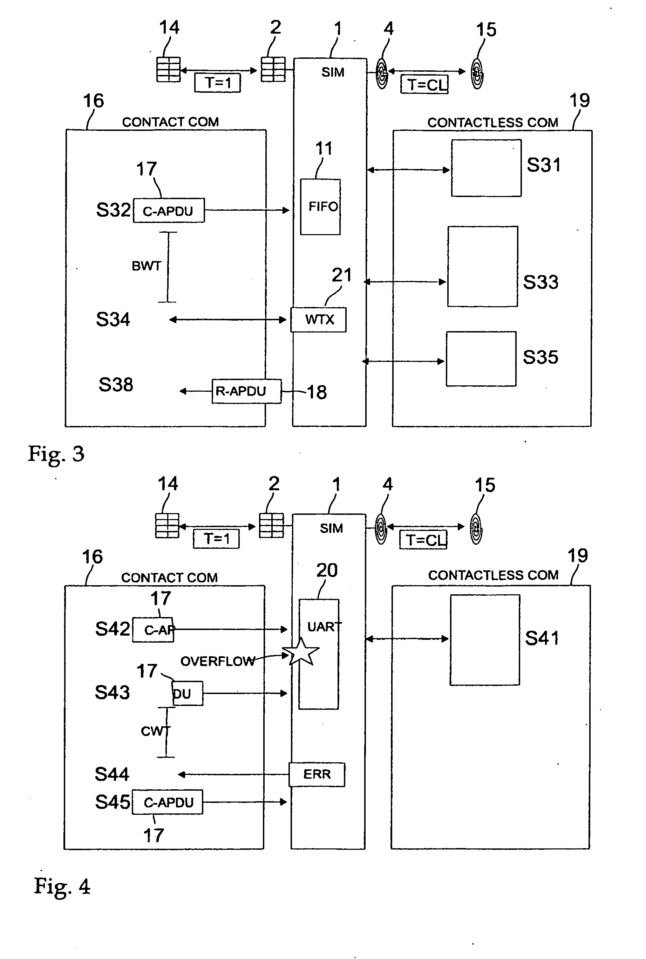

In ähnlicher Weise zeigen die Figuren 3 und 4 zwei alternative Sequenzialisierungsverfahren für eine kontaktbehaftete Datenkommunikation 16 gemäß dem T=1-Protokoll, die während einer kontaktlosen Datenkommunikation 19 beginnt. Der umgekehrte Fall einer während einer kontaktbehafteten Datenkommunikation 16 einsetzenden kontaktlosen Datenkommunikation 19 kann im T=1-Protokoll prinzipiell analog zum T=0-Protokoll realisiert werden, also entweder wie in der unteren Hälfte von Figur 2 dargestellt oder als Verfahren, welches mit dem Schritt 32 aus Fig. 3 beginnt.

Sowohl Fig. 3 als auch Fig. 4 zeigen den Fall einer während einer kontaktlosen Datenkommunikation 19 beginnenden kontaktbehafteten Datenkommunikation 16. Im T=1-Protokoll kann der Empfang von Kopfdaten 17a und Nutzdaten 17b einer Anweisung 17 (C-APDU) nicht wie bei dem T=0 Protokoll (vgl. Fig. 2, oben) unterbrochen werden. Für die T=1-Datenkommunikation 16 bieten sich deshalb zwei Alternativen an, die durch die Schritte S31 bis S38 (Fig. 3) und S41 bis S45 (Fig. 4) realisiert werden.

Bei der in Fig. 3 dargestellten Ausführungsform wird eine in Schritt S31 begonnene kontaktlose Datenkommunikation 19 mit Beginn der kontaktbehafteten Datenkommunikation 16 von der Sequenzialisierungseinrichtung 6 unterbrochen, um zunächst die kontaktbehaftete Datenkommunikation 16 zu beginnen. Dazu wird in Schritt S32 die C-APDU 17 über die kontaktbehaftete Schnittstelle 2 empfangen und in einem FIFO-Speicher 11 zwischengespeichert. Alternativ können die Daten 17a,17b der eingehenden Anweisung 17 auch mittels eines Direktspeicherzugriffs (DMA) oder Interrupt-gesteuert prioritär in einem sonstigen geeigneten Speicher oder Speicherbereich der SIM-Karte 1 abgelegt werden. Die kontaktbehaftete Datenkommunikation 16 wird danach wiederum zugunsten der Fortführung der kontaktlosen Datenkommunikation 19 (Schritt S33) unterbrochen.

Die vorgegebene Antwortzeit (BWT, "Block Waiting Time") für das Erzeugen und Versenden einer Antwort 18 (R-APDU) auf die eingegangene Anweisung 17 wird in der SIM-Karte 1 überwacht. Rechtzeitig vor Ablauf der BWT sendet die SIM-Karte 1 in einem Schritt S34 eine Verlängerungsanfrage 21 in der Form eines Waiting Time Extension Request (WTX Request) und erhält eine entsprechende Bestätigung ("Waiting Time Extension Acknowledge" - WTX Ack). Das Anfordern einer Verlängerung der Wartezeit kann gegebenenfalls mehrfach erfolgen, bis die kontaktlose Datenkommunikation 19 abgeschlossen wird (Schritt S35). Das Anfordern S34 der Verlängerung kann gesteuert durch die CPU 7 der SIM-Karte 1 oder durch die kontaktbehaftete Schnittstelleneinrichtung 2, 3 erfolgen. Danach fährt die SIM-Karte 1 mit der Bearbeitung der kontaktbehafteten Datenkommunikation 16 fort (Schritt S38). Insbesondere werden die mit dem empfangenen Kommando 17 verbundenen Schritte ausgeführte und eine entsprechende R-APDU 18 über die kontaktbehaftete Schnittstelleneinrichtung 2, 3 an die externe Kommunikationseinheit 12 versandt.

Zudem sollte die Antwortzeit BWT bereits in der den beschriebenen Verfahren vorgelagerten Initialisierungsphase (ATR; "Answer to Reset") der kontaktbehafteten Datenkommunikation 16 entsprechend angepasst werden. Die BWT wird zwischen der SIM-Karte 1 und der externen Kommunikationseinheit 12 so vereinbart, dass sie einen möglichst hohen Wert aufweist.

Im Fall einer laufenden kontaktbehafteten Datenkommunikation 16 und einer dann beginnenden kontaktlosen Datenkommunikation 19 kann auch im T=1-Protokoll die kontaktbehaftete Datenkommunikation 16 unterbrochen und solange wie nötig durch entsprechende Verlängerungsanfragen 21 aufrecht erhalten werden bis die kontaktlose Datenkommunikation 19 abgeschlossen ist. Diese Lösung ist wiederum auch in Fig. 3 erkennbar, wenn man als Beginn der kontaktlosen Datenkommunikation den Schritt S33 ansieht und sich den Schritt S31 wegdenkt oder dem Abschluss einer vorangehenden kontaktlosen Datenkommunikation zuordnet.

Vor einer Unterbrechung der Bearbeitung einer Datenkommunikation zugunsten der Bearbeitung einer anderen Datenkommunikation wird geprüft, ob die Datenkommunikation überhaupt unterbrochen werden darf. So kann beispielsweise definiert sein, dass nur die kontaktbehaftete Datenkommunikation unterbrochen werden darf. Auf der SIM-Karte 1 gespeicherte Parameter für die Sequenzialisierung können diese Information enthalten, welche Art der Datenkommunikation unterbrochen werden darf. Ferner kann in den zu prüfenden Parametern unterschieden werden, ob die Datenkommunikation als initiale Datenkommunikation zugunsten einer zweiten Datenkommunikation oder als zweite Datenkommunikation zugunsten einer initialen Datenkommunikation unterbrochen werden darf. Die zu prüfenden Parameter können kartenspezifisch, anwendungsspezifisch und/oder kommandospezifisch gestaltet sein. Somit hätte beispielsweise der Anbieter einer Anwendung die Möglichkeit ohne eine Änderung der Steuerungssoftware in der SIM-Karte das Verhalten der SIM-Karte seinen Sicherheitsanforderungen anzupassen.

Zudem kann geprüft werden, ob eine Unterbrechung einer Datenkommunikation überhaupt nötig ist. Wenn die zu erwartende Restlaufzeit zur Bearbeitung einer Datenkommunikation einen Grenzwert unterschreitet, kann die Datenkommunikation fortgeführt werden, ohne dass eine Unterbrechung nötig ist. Die Restlaufzeit kann aus einer gemessenen Kommandolaufzeit und einer erwarteten Solllaufzeit für das Kommando errechnet werden. Der Grenzwert kann als Parameter für die Sequenzialisierung wiederum kartenspezifisch, anwendungsspezifisch und/oder kommandospezifisch gestaltet sein.

Die Notwendigkeit und/oder Zulässigkeit der Unterbrechung wie beschrieben zu prüfen, ist eine auf alle Ausführungsformen der Erfindung anwendbare Option.

Bei einer in Fig. 4 gezeigten nicht zur Erfindung gehörenden Alternative für das T=1 Protokoll wird eine laufende kontaktlose Datenkommunikation 19 (Schritt S41) bei Beginn einer konkurrierenden kontaktbehafteten Datenkommunikation 16 nicht unterbrochen, sondern zu Ende geführt.

Die konkurrierende kontaktbehaftete Datenkommunikation 16 wird hierbei nicht aktiv unterbrochen oder beendet sondern lediglich nicht bearbeitet. D.h., dass in Schritt S42 an der kontaktbehafteten Schnittstelle 2 eingehende Daten einer C-APDU 17 zwar in einen der kontaktbehafteten Schnittstelle 2 nachgeschalteten asynchroner UART-Eingangspuffer 20 gelangen, diese Daten dann aber nicht wie üblich prioritär ausgelesen weiterverarbeitet werden. Dies hat zur Folge, dass der in der Regel verhältnismäßige kleine UART-Puffer 20 bereits nach einem Teil der eingehenden Daten (Schritt S42) der C-APDU 17 überläuft (OVERFLOW) und zumindest die restlichen, nach dem Überlauf eintreffenden Daten verlorengehen (Schritt S43).

Nach Beendigung der kontaktlosen Datenkommunikation 19 erkennt die Sequenzialisierungseinrichtung 6 den Überlauf des UART-Puffers 20 und somit, dass während der Abarbeitung der kontaktlosen Datenkommunikation 19 eine konkurrierende kontaktbehaftete Datenkommunikation 16 in Schritt S23 und S24 stattgefunden hat, die nicht vollständig empfangen werden konnte. Gegebenenfalls muss die Sequenzialisierungseinrichtung 6 noch die verbleibenden Daten der C-APDU 17 in Schritt S43 ins Leere laufen lassen. Das Ende der Übertragung der C-APDU 17 erkennt die Sequentialisierungseinrichtung 6 an dem Verstreichen der Zeichenwartezeit CWT ("Character Waiting Time), die die maximale Zeitspanne zwischen den Startflanken zweier aufeinander folgender Zeichen innerhalb eines eingehenden Datenblocks definiert. Der fehlerhafte Empfang der C-APDU 17 in den Schritten S18 und S19 wird dann mit einer Fehlermeldung (ERR) der Synchronisationseinrichtung 6 oder der kontaktbehafteten Schnittstelleneinrichtung 2, 3 an die externe Kommunikationseinheit 12 in Schritt S44 quittiert, woraufhin die externe Kommunikationseinheit 12 die C-APDU 17 erneut sendet, die dann ordnungsgemäß und vollständig empfangen werden kann (Schritt S45).

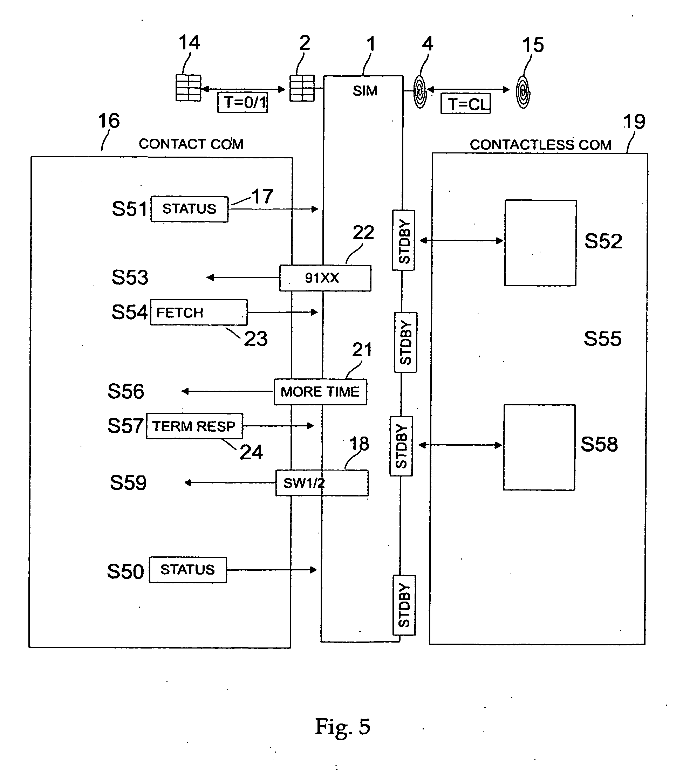

Figur 5 zeigt schließlich mit den Schritten S51 bis S59 eine weitere, nicht erfindungsgemäße Möglichkeit einer Sequenzialisierung an sich konkurrierender Datenkommunikationen 16,19 für den Fall, dass eine kontaktlose Datenkommunikation 19 während einer bereits laufenden kontaktbehafteten Datenkommunikation 16 einsetzt. Im Gegensatz zu den bisher gezeigten Ansätzen erfolgt die Sequenzialisierung jedoch nicht allein durch die SIM-Karte, sondern zumindest teilweise in Zusammenarbeit mit der externen Kommunikationseinheiten 12.

Die laufende kontaktbehaftete Datenkommunikation 16 wird hierzu von der Sequenzialisierungseinrichtung 6 zu verschiedenen Zeitpunkten temporär unterbrochen und eine Empfangsbereitschaft (STANDBY) der kontaktlosen Schnittstelle 4 hergestellt, um etwaige beginnende kontaktlose Datenkommunikationen 19 erkennen und bearbeiten zu können. Beispielsweise kann nach dem Senden einer C-APDU 17 von der externen Kommunikationseinheit 12 an die kontaktbehaftete Schnittstelleneinrichtung 2, 3 in Schritt S51 und vor dem Rücksenden einer entsprechenden R-APDU 18 in Schritt S53 eine temporäre Empfangsbereitschaft der kontaktlosen Schnittstelleneinrichtung 2, 3, eingerichtet werden (Schritt S52), um eine während dieser Zeitspanne beginnende etwaige kontaktlose Datenkommunikation 19 bearbeiten zu können.

Bei SIM-Mobilfunkkarten 1 steht im Rahmen des "SIM-Application-Toolkit" ein spezieller Kommandosatz zur Verfügung, der einer Mobilfunkkarte 1 proaktive Kommandos bereitstellt, die das herkömmliche Master/Slave-Verhältnis zwischen einer SIM-Mobilfunkkarte 1 und einer Kommunikationseinheit 12,13 umgehen und es der SIM-Karte 1 gestatten, ihrerseits Anweisungen an die Kommunikationseinheit 12 zu richten, die von dieser zu beantworten sind. Hierzu eignen sich insbesondere die Kommandos STATUS, FETCH und TERMINAL RESPONSE. Mit Hilfe des Kommandos STATUS fragt die Kommunikationseinheit 12 an, ob die SIM-Karte 1 proaktive Kommandos absetzen möchte. Die Karte antwortet mit einem Statuscode "91XX", falls sie selbst ein Kommando senden möchte. Durch Übertragen des FETCH-Kommandos holt die externe Kommunikationseinheit 12 dann eine von ihr zu bearbeitende Anweisung bei der SIM-Karte 1 ab, während mittels des TERMINAL-RESPONSE-Kommandos (TERM RESP) die entsprechende Antwort der externen Kommunikationseinheit 12 auf die zuvor abgeholte Anweisung an die SIM-Karte 1 übergeben wird. Durch Verwendung der proaktiven Kommandos des SIM-Application-Toolkit kann, z.B. veranlasst durch die Synchronisationseinrichtung 6, eine Empfangsbereitschaft (STANDBY) an der kontaktlosen Schnittstelle 4 gezielt mehrfach hintereinander erreicht werden.

Die Antwort 22 in Form des Statuscodes "91XX" der SIM-Karte 1 in Schritt S53 veranlasst die externe Kommunikationseinheit 12, eine Anweisung bei der SIM-Karte 1 mit einem FETCH-Kommando 23 abzuholen (Schritt S54). Die SIM-Karte 1 nutzt die ihr zugestandene Bearbeitungszeit wiederum für eine Empfangsbereitschaftsphase S55 der kontaktlosen Schnittstelle 4.

Als von der externen Konmmunikationseinheit 12 abzuholende Anweisung kann nun vorzugsweise die "MORE-TIME"-Anweisung verwendet werden, mit der die SIM-Karte 1 bei der externen Kommunikationseinheit 12 weitere Zeit für die Bearbeitung von Aufgaben anfordert. Im vorliegenden Falle fordert sie durch den Schritt des Sendens S56 einer MORE-TIME-Anfrage 21 die Zeit für eine weitere Empfangsbereitschaftsphase (STDBY) zur Bearbeitung der kontaktlosen Datenkommunikation 19 an. Die MORE-TIME-Anweisung 21 der SIM-Karte 1 wird von der externen Kommunikationseinheit 12 mit einem TERMINAL-RESPONSE-Kommando gewährt (Schritt S57). Sollte nun in der weiteren Empfangsbereitschaftsphase eine kontaktlose Datenkommunikation 19 beginnen (Schritt S58), so kann die SIM-Karte 1 weitere MORE-TIME-Anweisungen senden. Vorzugsweise wird die Empfangsbereitschaft derart bis zum Abschluss der kontaktlosen Datenkommunikation 19 verlängert. Die SIM-Karte 1 kann in Schritt S59 als Antwort 18 beispielsweise einen Statuscode "9000" über die kontaktbehaftete Schnittstelleneinrichtung 2, 3 an die Kommunikationseinheit 12 senden.

Während der proaktiven Phase kann die Sequenzialisierungseinrichtung 6 jeweils vor dem Senden 553, S56, S59 einer Antwort die kontaktlose Schnittstelleneinrichtung 4, 5 freischalten/aktivieren, um eine etwaige kontaktlose Datenkommunikation 19 zu erkennen und bearbeiten zu können. Nach dem Senden der Antwort wird die kontaktbehaftete Schnittstelleneinrichtung 2, 3 wieder aktiviert.

Mit einem Schritt S50 des Sendens eines weiteren STATUS-Kommandos beginnt dann möglicherweise eine weitere Datenkommunikation 16 zwischen der Kommunikationseinheit 12 und der SIM-Karte 1 über die kontaktbehaftete Schnittstelleneinrichtung 2, 3.

Das Zeitintervall zwischen dem Empfang zweier STATUS-Kommandos bzw. zwischen der letzten Antwort der SIM-Karte 1 einer proaktiven Phase und dem nächsten STATUS-Kommando sollte in geeigneter Weise gewählt werden. In der Regel wird das Zeitintervall zwischen der SIM-Karte 1 und der Kommunikationseinheit 12 in einer Initialisierungsphase der kontaktbehafteten Kommunikation 16 ausgehandelt. Die Kommunikationseinheit 12 sendet STATUS-Kommandos dann entsprechend in dem vereinbarten Zeitintervall. Aufgrund der nötigen schnellen Reaktionszeiten für die kontaktlose Datenkommunikation 19 sollte das Zeitintervall so klein wie möglich sein.

Aus der Sicht der Kommunikationseinheit 12 wäre dagegen eher ein möglichst großes Zeitintervall sinnvoll, beispielsweise um Strom zu sparen oder Zeiten zu vermeiden in denen die Kommunikationseinheit 12 auf eine Anweisung der SIM-Karte 1 wartet. Daher soll das Zeitintervall (temporär) verkürzt werden können. Als Auslöser für die Verkürzung kann beispielsweise eine Eingabe des Benutzers auf der Kommunikationseinheit 12 verwendet werden, mit welcher der Benutzer eine Freigabe/ Aktivierung der kontaktlosen Kommunikationsschnittstelle 4, 5, vorzugsweise für einen begrenzten Zeitraum von beispielsweise einer Minute, anfordert. Als Auslöser kann aber ebenso das Erkennen eines kontaktlosen Datenkornrnunikationsfeldes oder das Erkennen eines Versuchs zum Aufbau der kontaktlosen Datenkommunikation dienen, die vorzugsweise durch die SIM-Karte 1 erkannt und der Kommunikationseinheit 12 mitgeteilt wird, beispielsweise in der Form eines Statuscode einer Antwort 18.

Der Benutzer kann die kontaktlose Schnittstelleneinrichtung 4, 5 dann für einen bestimmten Zeitraum, zum Beispiel eine Minute, über das SIM-Application-Toolkit der Mobilfunkkarte aktivieren, so dass während dieses Zeitraums die Sequenzialisierungseinrichtung 6 über Zyklen von proaktiven Kommandos die Empfangsbereitschaft der kontaktlosen Schnittstelleneinrichtung 4,5 herstellt. Die Sequenzialisierungseinrichtung 6 bzw. die kontaktlose Schnittstelleneinrichtung 4, 5 - gegebenenfalls nach einer Initialisierung der kontaktlosen Schnittstelle 4 - wartet für eine bestimmte Zeitspanne (z.B. zwei Sekunden) auf eine an der kontaktlosen Schnittstelle 4 beginnende kontaktlose Datenkommunikation 19. Falls innerhalb dieser Zeitspanne eine kontaktlose Datenkommunikation 19 beginnt, sorgt die Sequenzialisierungseinrichtung 6 dafür, dass diese zu Ende geführt werden kann.

Hierbei ist es vorteilhaft, dass nach einer kontaktlosen Datenkommunikation 19 sofort ein Nutzerdialog über die kontaktbehaftete Schnittstelle 2 gestartet werden kann. Auch ist es möglich, anstatt der "MORE TIME"-Anweisung andere proaktive Kommandos zu verwenden, bei denen zusätzlich auf eine an der kontaktlosen Schnittstelle 4 einsetzende kontaktlose Datenkommunikation 19 gewartet wird. Statt des oben beschriebenen proaktiven Betriebs können auch ein oder mehrere spezielle APDUs von der externen Kommunikationseinheit 12 an die SIM-Karte 1 geschickt werden, die für eine definierte Zeit auf eine kontaktlose Datenkommunikation 19 an der kontaktlosen Schnittstelle 4 warten. Ebenso ist es möglich, dass die externe Kommunikationseinheit 12, die in der Regel ein Mobilfunkendgerät ist, ein zyklisches Polling mit geeigneten APDUs betreibt, damit der Benutzer der Mobilfunkkarte 1 keine Menüauswahl in dem SIM- Application-Toolkit vornehmen muss, um die kontaktlose Schnittstelleneinrichtung 4, 5 zu aktivieren.

Bei den oben beschriebenen Ausführungsformen ist zu berücksichtigen, dass das Auftreten eines Magnetfeldes an der kontaktlosen Schnittstelle 4 vorzugsweise nicht unbedingt bedeutet, dass eine kontaktlose Datenkommunikation 19 tatsächlich erfolgen wird. Es kann deshalb sinnvoll sein, den Beginn einer kontaktlosen Datenkommunikation 19 als den Zeitpunkt zu definieren, an dem die SIM-Karte 1 von der externen Funkkommunikationseinheit 13 selektiert wird. Bis zu diesem Zeitpunkt kann insbesondere das Empfangen und Zwischenspeichern von Daten im Rahmen der kontaktbehafteten Datenkommunikation 16 durch die kontaktbehaftete Schnittstelleneinrichtung 2, 3 und eine Initialisierung und Antikollision an der kontaktlosen Schnittstelle 4 parallel ablaufen.

Ebenso ist eine kontaktlose Datenkommunikation 19, die auch aus mehreren APDUs bestehen kann, vorzugsweise "kurz", dass heißt, dass sie bei zwei aufeinander folgenden kontaktbehafteten Datenkommunikationen 16 zwischen deren APDUs geschoben werden kann. In diesem Zusammenhang kann es sinnvoll sein, die Länge einer kontaktlosen Datenkommunikation 19 zu überwachen und gegebenenfalls abzubrechen, falls sie zu lange dauert. Bei längeren kontaktlosen Datenkommunikationen 19 kann es sinnvoll sein, die jeweiligen APDUs der konkurrierenden kontaktbehafteten und kontaktlosen Datenkommunikationen 16,19 abwechselnd abzuarbeiten. Dazu ist jedoch auch ein an der kontaktlosen Schnittstelleneinrichtung 4, 5 einzusetzender Verzögerungsmechanismus nötig. Da die Protokollmechanismen des kontaktlosen T=CL-Protokolls ähnlich mit denjenigen des kontaktbehafteten T=1-Protokolls sind, kann auch bei einer kontaktlosen Datenkommunikation 19 ein Überwachen oder Verlängern der Antwortzeit durch WTX-Anfragen und/oder das wiederholte Versenden/Empfangen von ignorierten und/oder verlorenen Datenblöcken eingesetzt werden.

## Patentansprüche

1. Verfahren in einem tragbaren Datenträger (1) mit einer ersten Schnittstelle (4) und einer zweiten Schnittstelle (2) zur Kommunikation mit externen Kommunikationseinheiten,
mit den folgenden Schritten in dem tragbaren Datenträger (1), der eine Chipkarte ist:
- Unterbrechen (S1; S31) einer Bearbeitung einer ersten Datenkommunikation (19), die über die erste Schnittstelle (4) erfolgt;
- Beginnen (S2; S32) einer zweiten Datenkommunikation (16) über die zweite Schnittstelle (2) nach dem Schritt des Unterbrechens (S1; S31);
- wobei nach dem Schritt des Beginnens (S2;S32) der zweiten Datenkommunikation (16) ein Fortsetzen (S3,S5,S7; S33,S35) der unterbrochenen Bearbeitung der ersten Datenkommunikation (19) erfolgt;
wobei die erste oder die zweite Datenkommunikation eine kontaktbehaftete Datenkommunikation und respektive die zweite oder erste Datenkommunikation eine kontaktlose Datenkommunikation ist; **dadurch gekennzeichnet, dass**
- nach dem Schritt des Fortsetzens (S3,S5,S7; S33,S35) der ersten Datenkommunikation die begonnene zweite Datenkommunikation (16) aufrechterhalten wird mittels Versenden (S4,S6; S34) einer Verlängerungsanfrage (21) für eine vorgegebene Wartezeit (WWT; BWT) durch den tragbaren Datenträger (1) in der zweiten Datenkommunikation (16) über die zweite Schnittstelle (2) vor Ablauf der Wartezeit,
wobei die Wartezeit eine Work Waiting Time inn Sinne des T=0-Protokolls oder eine block Waiting Time im Sinne des T=1-Protokolls oder des T=CL-Protokolls ist.

2. Verfahren nach Anspruch 1, **dadurch gekennzeichnet, dass** die fortgesetzte Bearbeitung (S3, S5, S7; S33, S35) der ersten Datenkommunikation (19) zumindest einmal durch das Aufrechterhalten (S4,S6; S34) der zweiten Datenkommunikation (16) unterbrochen wird.

3. Verfahren nach Anspruch 1 oder 2, **dadurch gekennzeichnet, dass** der Schritt des Beginnens (S3; S32) der zweiten Datenkommunikation (16) ein Empfangen zumindest eines ersten Teils von zu empfangenden Daten umfasst.

4. Verfahren nach Anspruch 3, **dadurch gekennzeichnet, dass** der Schritt des Beginnens (S3; S32) der zweiten Datenkommunikation (16) ein Zwischenspeichern des zumindest ersten Teils der zu empfangenden Daten umfasst.

5. Verfahren nach einem der Ansprüche 1 bis 4, **dadurch gekennzeichnet, dass** ein Abschließen (S8, S9, S10; S38) der aufrecht erhaltenen zweiten Datenkommunikation (16) nach einem Beenden (S7; S35) der ersten Datenkommunikation (19) erfolgt.

6. Verfahren nach Anspruch 5, **dadurch gekennzeichnet, dass** das Abschließen (S8, S9, S10; S38) der aufrecht erhaltenen zweiten Datenkommunikation (16) ein Empfangen (S9) eines zweiten Teils der zu empfangenden Daten umfasst.

7. Verfahren nach Anspruch 5 oder 6, **dadurch gekennzeichnet, dass** das Abschließen (S8, S9, S10; S38) der aufrecht erhaltenen zweiten Datenkommunikation (16) ein Verarbeiten (S10; S38) der zu empfangenden Daten umfasst.

8. Verfahren nach einem der Ansprüche 3 bis 6, **dadurch gekennzeichnet, dass** der empfangene erste Teil eine Anweisung (17) ist.

9. Verfahren nach einem der Ansprüche 3 bis 6, **dadurch gekennzeichnet, dass** der empfangene erste Teil ein Anweisungskopf (17a) ist.

10. Verfahren nach einem der Ansprüche 1 bis 9, **gekennzeichnet durch** ein Überwachen der vorgegebenen Wartezeit (BWT/WWT) in der zweiten Datenkommunikation (16) und Verlängern der Wartezeit (BWT/WWT), falls
die fortgesetzte erste Datenkommunikation (19) nicht innerhalb der Wartezeit beendet wird.

11. Chipkarte (1) eingerichtet zur Ausführung eines Verfahrens nach einem der Ansprüche 1 bis 10.

12. Chipkarte (1) nach Anpruch 11 **dadurch gekennzeichnet, dass** die Chipkate (1) eine Sim-Mobilfunkkarte ist.

## Claims

1. A method in a portable data carrier (1) having a first interface (4) and a second interface (2) for communication with external communication units, having the following steps in the portable data carrier (1) which is a chip card:
- interrupting (S1; S31) a handling of a first data communication (19) being effected via the first interface (4);
- starting (S2; S32) a second data communication (16) via the second interface (2) after the interrupting step (S1; S31);
- wherein after the step of starting (S2; S32) the second data communication (16), a continuation (S3, S5, S7; S33, S35) of the interrupted handling of the first data communication (19) is effected;
- wherein the first or the second data communication is a contact-type data communication and respectively the second or the first data communication is a contactless data communication;
**characterized in that**
- after the step of continuing (S3, S5, S7; S33, S35) the first data communication the started second data communication (16) is maintained by sending (S4, S6; S34) an extension request (21) for a specified waiting time (WWT; BWT) by the portable data carrier (1) in the second data communication (16) via the second interface (2) before the end of the waiting time,
- wherein the waiting time is a Work Waiting Time according to the T=0 protocol or a Block Waiting Time according to the T=1 protocol or the T=CL protocol.

2. The method according to claim 1, **characterized in that** the continued handling (S3, S5, S7; S33, S35) of the first data communication (19) is interrupted at least once by the maintaining (S4, S6; S34) of the second data communication (16).

3. The method according to claim 1 or 2, **characterized in that** the step of starting (S3; S32) the second data communication (16) comprises a receiving of at least a first part of data to be received.

4. The method according to claim 3, **characterized in that** the step of starting (S3; S32) the second data communication (16) comprises a temporary storing of the at least first part of the data to be received.

5. The method according to any of claims 1 to 4, **characterized in that** a completion (S8, S9, S10; S38) of the maintained second data communication (16) is effected after a termination (S7; S35) of the first data communication (19).

6. The method according to claim 5, **characterized in that** the completion (S8, S9, S10; S38) of the maintained second data communication (16) comprises a receiving (S9) of a second part of the data to be received.

7. The method according to claim 5 or 6, **characterized in that** the completion (S8, S9, S10; S38) of the maintained second data communication (16) comprises a processing (S10; S38) of the data to be received.

8. The method according to any of claims 3 to 6, **characterized in that** the received first part is an instruction (17).

9. The method according to any of claims 3 to 6, **characterized in that** the received first part is an instruction header (17a).

10. The method according to any of claims 1 to 9, **characterized by** a monitoring of the specified waiting time (BWT/WWT) in the second data communication (16) and extension of the waiting time (BWT/WWT) if the continued first data communication (19) is not terminated within the waiting time.

11. A chip card (1) adapted for executing a method according to any of claims 1 to 10.

12. The chip card (1) according to claim 11, **characterized in that** the chip card (1) is a SIM mobile radio card.

## Revendications

1. Procédé dans un support de données (1) portable avec une première interface (4) et une deuxième interface (2) pour la communication avec des unités de communication externes,
comportant les étapes suivantes dans le support de données (1) portable, qui est une carte à puce :
- interruption (S1 ; S31) du traitement d'une première communication de données (19), qui s'effectue via la première interface (4) ;
- démarrage (S2 ; S32) d'une deuxième communication de données (16) via la deuxième interface (2) à la suite de l'étape d'interruption (S1 ; S31) ;
- où, après l'étape de démarrage (S2 ; S32) de la deuxième communication de données (16), s'effectue une reprise (S3, S5, S7 ; S33, S35) du traitement interrompu de la première communication de données (19) ;
- la première ou la deuxième communication de données étant une communication de données avec contact, et respectivement la deuxième ou la première communication de données étant une communication de données sans contact ;
**caractérisé en ce que**
- à la suite de l'étape de la reprise (S3, S5, S7 ; S33, S35) de la première communication de données, la deuxième communication de données (16) commencée est maintenue au moyen de l'émission (S4, S6 ; S34) d'une demande de prolongation (21) pour un temps d'attente (WVVT ; BWT) prédéfini par le support de données (1) portable dans la deuxième communication de données (16) via la deuxième interface (2) avant la fin du temps d'attente,
ledit temps d'attente étant un Work Waiting Time dans le sens du protocole T = 0, ou un Work Waiting Time dans le sens du protocole T = 1 ou du protocole T = CL.

2. Procédé selon la revendication 1, **caractérisé en ce que** le traitement (S3, S5, S7 ; S33, S35) repris de la première communication de données (19) est interrompu au moins une fois par le maintien (S4, S6 ; S34) de la deuxième communication de données (16).

3. Procédé selon la revendication 1 ou 2, **caractérisé en ce que** l'étape du démarrage (S3 ; S32) de la deuxième communication de données (16) comporte une réception d'au moins une première partie des données à recevoir.

4. Procédé selon la revendication 3 **caractérisé en ce que** l'étape du démarrage (S3 ; S32) de la deuxième communication de données (16) comporte un stockage temporaire de ladite au moins une première partie des données à recevoir.

5. Procédé selon l'une quelconque des revendications 1 à 4, **caractérisé en ce qu'**un achèvement (S8, S9, S10; S38) de la deuxième communication de données (16) maintenue s'effectue après une clôture (S7, S35) de la première communication de données (19).

6. Procédé selon la revendication 5, **caractérisé en ce que** l'achèvement (S8, S9, S10 ; S38) de la deuxième communication de données (16) maintenue comporte une réception (S9) d'une deuxième partie des données à recevoir.

7. Procédé selon la revendication 5 ou 6, **caractérisé en ce que** l'achèvement (S8, S9, S10 ; S38) de la deuxième communication de données (16) maintenue comporte un traitement (S10 ; S38) des données à recevoir.

8. Procédé selon l'une quelconque des revendications 3 à 6, **caractérisé en ce que** la première partie reçue est une instruction (17).

9. Procédé selon l'une quelconque des revendications 3 à 6, **caractérisé en ce que** la première partie reçue est un en-tête d'instruction (17a).

10. Procédé selon l'une quelconque des revendications 1 à 9, **caractérisé par** un contrôle du temps d'attente (BWT/WWT) prédéfini dans la deuxième communication de données (16) et une prolongation du temps d'attente (BWT/WWT) au cas où la première communication de données (19) reprise ne se termine pas à l'intérieur du temps d'attente.

11. Carte à puce (1) configurée pour la mise en oeuvre d'un procédé selon l'une des revendications 1 à 10.

12. Carte à puce (1) selon la revendication 11, **caractérisée en ce que** la carte à puce (1) est une carte SIM d'un téléphone mobile.
